(19) Europäisches Patentamt
European Patent Office
Office européen des brevets

(11) EP 2 489 702 A1

(12) **EUROPEAN PATENT APPLICATION**
published in accordance with Art. 153(4) EPC

(43) Date of publication:
**22.08.2012 Bulletin 2012/34**

(21) Application number: **10818892.1**

(22) Date of filing: **27.09.2010**

(51) Int Cl.:
***C09B 67/46*** *(2006.01)* ***C09B 67/20*** *(2006.01)*
***C09D 17/00*** *(2006.01)* ***G02B 5/20*** *(2006.01)*

(86) International application number:
**PCT/JP2010/066674**

(87) International publication number:
**WO 2011/037220 (31.03.2011 Gazette 2011/13)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **28.09.2009 JP 2009223219**

(71) Applicant: **FUJIFILM Corporation**
**Tokyo 106-8620 (JP)**

(72) Inventors:
- **MOROZUMI, Kazumasa**
  **Fujinomiya-shi**
  **Shizuoka 418-8666 (JP)**
- **OSADA, Shuichiro**
  **Haibara-gun**
  **Shizuoka 421-0396 (JP)**

(74) Representative: **HOFFMANN EITLE**
**Patent- und Rechtsanwälte**
**Arabellastrasse 4**
**81925 München (DE)**

(54) **GREEN PIGMENT DISPERSION THAT CONTAINS PHTHALOCYANINE COMPOUND**

(57) A polyhalogenated zinc phthalocyanine pigment dispersion containing pigment fine particles made of a polyhalogenated zinc phthalocyanine compound having a specific structure in a medium, wherein the pigment dispersion has a contrast value of 40,000 or more, which is determined by a predefined measurement method.

EP 2 489 702 A1

## Description

TECHNICAL FIELD

The present invention relates to a pigment dispersion that is particularly suitable as a green coloring material used for a color filter.

BACKGROUND ART

In recent years technological development in increased screen size and higher definition of a liquid crystal display has been experiencing rapid growth. The use thereof has been expanding to a large extent not only in a display for a notebook computer and a monitor for a desktop computer but also in a monitor for a TV monitor. Under the circumstances, as a color filter used for a liquid crystal display or the like, a color filter having high color purity is required. It is particularly important that such demand characteristics are satisfied in a high definition display which enables high quality image display. Light passing through a color filter is colored with the color of each color pixel, and a color image is formed by integration of lights with the color (additive mixture of color). Accordingly, a color filter having color pixels with extremely high purity is required for the three colors of RGB which enable such image formation.

Among them, as a coloring pigment for green (G) color pixels, C.I. Pigment Green 36 (hereinafter, also simply referred to as "PG36") made of a copper phthalocyanine compound has been mainly used until now. However, it has rather poor color hue and transmission, and therefore efforts have been made to develop a coloring material for solving such problems. As an example of a pigment to overcome the problems, C.I. Pigment Green 58 (hereinafter, also simply referred to as "PG58") made of a polyhalogenated zinc phthalocyanine has been recently developed and suggested to be used as a coloring material of a color filter (see, Patent Literatures 1 to 3).

CITATION LIST

Patent Literatures

Patent Literature 1: JP-A-2008-122478 ("JP-A" means unexamined published Japanese patent application)
Patent Literature 2: JP-A-2007-284590
Patent Literature 3: JP-A-2006-284691

DISCLOSURE OF INVENTION

TECHNICAL PROBLEM

However, according to studies by the inventors of the present invention, it is found that PG58 has stronger aggregation force compared to conventionally used PG36 and it is difficult to achieve and maintain a favorable dispersion state when produced as a dispersion. For such reasons, even when color pixels of a color filter are produced by utilizing the characteristic of PG58 and favorable color hue and high transmission are obtained therefrom, it may be disadvantageous in terms of contrast, homogeneity or the like.
In view of the problems described above, the present invention has an object of providing a pigment dispersion which effectively exhibits optical properties of a polyhalogenated zinc phthalocyanine compound and inhibits secondary aggregation of fine particles in a dispersion, the pigment dispersion being particularly suitable as a good coloring material of green (G) color pixels of a color filter, and a resist composition using the pigment dispersion. Another object of the present invention is to provide a method for producing the pigment dispersion of a polyhalogenated zinc phthalocyanine compound.

SOLUTION TO PROBLEM

The above-described objects can be attained by the following means.

(1) A pigment dispersion comprising: a medium and pigment fine particles contained in the medium, the pigment dispersion is characterized in that the pigment fine particle is made of a compound represented by the following formula (1), and the pigment dispersion has a contrast value of 40,000 or more:

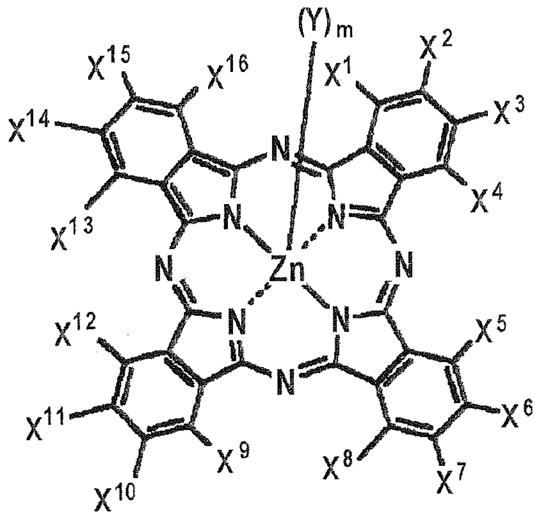

Formula (1)

wherein, any 8 to 16 of $X^1$ to $X^{16}$ represent a fluorine atom, a chlorine atom, a bromine atom, or an iodine atom whereas the remaining represent a hydrogen atom; The fluorine atom, chlorine atom, bromine atom, or iodine atom as $X^1$ to $X^{16}$ may be the same as or different from each other; Y represents a fluorine atom, a chlorine atom, a bromine atom, an iodine atom, or an oxygen atom, and m represents an integer of 0 to 2; and wherein, the contrast value is determined as follows:

[Contrast value: A dispersion having a pigment concentration of 15% by mass is coated to give a thickness of 2 μm on a glass plate, the resulting sample is interposed between two polarizing plates, and an amount of transmitted light when the polarization axes from a light source of a three-wavelength cold cathode tube are parallel (Ta) and an amount of transmitted light when the said polarization axes are perpendicular (Tb) are measured, and the amount of parallel transmitted light (Ta) is divided by the amount of perpendicular transmitted light (Tb) to give Ta/Tb].

(2) The pigment dispersion described in the above item (1), wherein the average particle diameter of primary particles of the pigment fine particles is 10 nm or more and 50 nm or less and particle size distribution is 20% or less, and the average particle diameter of secondary particles that are produced by aggregation of the primary particles is 10 nm or more and 70 nm or less and particle size distribution is 30% or less.
(3) The pigment dispersion described in the above item (1) or (2), wherein the dispersion comprises pigment fine particles produced by mixing a solution containing the compound represented by the above formula (1) dissolved in a good solvent with a poor solvent for the pigment, and producing the fine particles from the mixture solution.
(4) The pigment dispersion described in the above item (3), wherein the mixture solution for producing the pigment fine particles is prepared by concentration followed by re-dispersion.
(5) The pigment dispersion described in any one of the above items (1) to (4), which is a coloring material for a color filter.
(6) A colored resist composition for a color filter, wherein the colored resist composition comprises the pigment dispersion described in the above item (5).
(7) A method of producing a pigment dispersion comprising the steps of:

preparing a dispersion of pigment compound by bringing a pigment solution mixed with a poor solvent to form the pigment fine particles in a mixed liquid; the pigment solution containing a pigment compound represented by the following formula (1) dissolved in a good solvent, the poor solvent being poorly soluble for the pigment, and concentrating the obtained pigment dispersion, and re-dispersing the resultant.

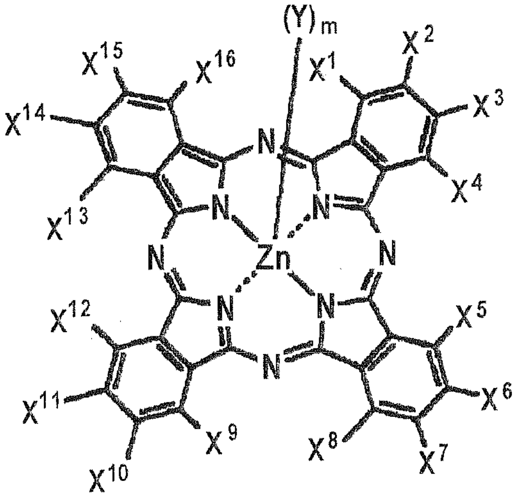

Formula (1)

wherein, any 8 to 16 of $X^1$ to $X^{16}$ represent a fluorine atom, a chlorine atom, a bromine atom, or an iodine atom whereas the remaining represent a hydrogen atom; The fluorine atom, chlorine atom, bromine atom, or iodine atom as $X^1$ to $X^{16}$ may be the same as or different from each other; Y represents a fluorine atom, a chlorine atom, a bromine atom, an iodine atom, or an oxygen atom, and m represents an integer of 0 to 2.

ADVANTAGEOUS EFFECTS OF INVENTION

The pigment dispersion of the present invention and a resist composition using the dispersion have an excellent function effects that, as a dispersion using fine particles of a polyhalogenated zinc phthalocyanine compound, it has a high contrast value never obtained before, the secondary aggregation in the dispersion is suppressed, and by using the dispersion and resist composition, color hue of favorable green color of the compound and light transmission are achieved, and if required, green (G) color pixels of high quality color filter having no unevenness can be obtained. Further, according to the production method of the present invention, the pigment dispersion of a polyhalogenated zinc phthalocyanine compound can be very suitably produced.
Other and further features and advantages of the invention will appear more fully from the following description, appropriately referring to the accompanying drawing.

BRIEF DESCRIPTION OF THE DRAWING

[FIG. 1]
FIG. 1 schematically illustrates a configuration of a dynamic light-scattering measuring apparatus, which is used for measuring the average particle diameter of secondary particles.

MODE FOR CARRYING OUT THE INVENTION

The pigment dispersion of the present invention shows a high contrast value of 40,000 or more. As explained above, PG58, which is a newly developed green pigment, has high aggregation force. Thus, it may be difficult to disperse it when its particle diameter is reduced or the like. Further, when the secondary aggregate is large, a contrast value achieved by the dispersion is lowered, and performance of pixels in a color filter is also deteriorated. Even after enforced dispersion by using a strong disperser or the like, a polydispersion state is yielded in which the secondary aggregates have a multiple particle diameter distributions, and therefore it is difficult to maintain a favorable dispersion state. When a thixotropic nature locally occurs according to lapse of time as a result of having polydispersion state, coating unevenness may be generated when a colored film is produced by using the dispersion.
According to a preferred embodiment of the present invention, by using fine particles made of a polyhalogenated zinc phthalocyanine compound having monodispersity and fine particles as produced by a build-up method, the above-described problems that are intrinsic to the compound are overcome, and as a result, a dispersion which can be easily dispersed and hardly generates any coating unevenness over time can be provided. Meanwhile, in the present invention, the contrast value of a dispersion means a value that is measured by the following measurement method.

[Measurement Method of Contrast]

A pigment dispersion having a pigment concentration of 15% by mass is applied to a glass substrate to give a thickness of 2 μm to thereby produce respective samples. As a backlight unit, a three-wavelength cold-cathode-tube light source (FWL18EX-N, trade name, manufactured by Toshiba Lighting & Technology Corporation) provided with a diffuser plate is used. Each of the samples is placed between two sheets of polarizing plates (HLC2-2518, trade name, the polarizing plates were manufactured by Sanritz Corporation), and then amounts of transmitted light at the time when polarization axes of two polarizing plates are parallel and the time when the polarization axes are perpendicular are measured. The ratio of these transmitted light amounts is defined as a contrast (see Color Filter for 512 color display 10.4"-size TFT-LCD, co-authored by Ueki, Koseki, Fukunaga, and Yamanaka, The seventh Color Optics Conference (1990), etc.).

[Measurement Method of Color Difference]

Chromaticity is measured using a color luminance meter (BM-5 (trade name), manufactured by Topcon Technohouse Corporation). The above-described two sheets of polarizing plates, sample, and color luminance meter are placed at the following positions. One of the above polarizing plates is disposed at a distance of 13 mm from the backlight. A cylinder of 11 mm in diameter and 20 mm in length is disposed at a distance of 40 mm to 60 mm from the backlight. The light transmitted through the cylinder is irradiated to a measurement sample disposed at a distance of 65 mm from the backlight. The transmitted light is passed through the other polarizing plate disposed at a distance of 100 mm from the backlight and measured with a color luminance meter disposed at a distance of 400 mm from the backlight. The measuring angle in the color luminance meter is set to 2°. The light amount of the backlight is set so that its brightness (luminance) would be 1280 cd/$m^2$, when the two sheets of polarizing plates are arranged in a position of parallel nicol and no measurement sample is disposed.

(With respect to the compound represented by formula (1))

The dispersion of the present invention contains fine particles made of the compound represented by formula (1). The compound is a polyhalogenated zinc phthalocyanine compound and has higher coloring power compared to the conventional copper phthalocyanine-based pigments. Therefore, when used for forming color pixels of a color filter or the like, it is preferable in that the pigment concentration in a green photosensitive resin composition can be lowered, and it is particularly excellent in terms of color purity, color concentration, and transparency.

$X^1$ to $X^{16}$ are halogen atoms substituted with an aromatic ring, and 8 to 16 of them are a fluorine, chlorine, bromine, or iodine atom(s) and the remaining are hydrogen atoms. It is preferable that the compound has 8 or more bromine atoms or one or more chlorine atoms. Among them, a compound having 12 or more bromine atoms or 2 or more chlorine atoms has a highly transparent green color and is preferable for a green coloring agent for a color filter. The phthalocyanine used in the present invention can be produced according to the method described in, for example, JP-A-2003-16182.

Further, in order to produce a color filter having high color purity, it is preferable to additionally include a yellow pigment in the dispersion of the present invention. Preferred examples of the yellow pigment include an azo pigment, an isoindoline pigment, a quinophthalone pigment, and a metal azo complex pigment.
The yellow pigment may be used either singly or in combination of two or more. Of these, at least one selected from the quinophthalone pigment and the metal azo complex pigment is preferable. Specific examples of the pigment include C.I. Pigment Yellow 83, C.I. Pigment Yellow 128, C.I. Pigment Yellow 138, C.I. Pigment Yellow 139, C.I. Pigment Yellow 150, C.I. Pigment Yellow 180, and C.I. Pigment Yellow 185. Examples of the particularly preferred pigment include C.I. Pigment Yellow 138, C.I. Pigment Yellow 139, and C.I. Pigment Yellow 150.

The dispersion of the present invention may further contain other pigments in combination, and examples of the other pigments include the colorants described in paragraph Nos. [0038] to [0040] of JP-A-2005-17716, pigments described in paragraph Nos. [0068] to [0072] of JP-A-2005-361447, and coloring agents described in paragraph Nos. [0080] to [0088] of JP-A-2005-17521.

It is practical that the content of the pigment fine particles made of the compound represented by formula (1) is, although not specifically limited, 0.1 to 10% by mass when the pigment fine particles are immediately after they are produced by the re-precipitation method described below. Meanwhile, when a dispersion for forming color pixels of a color filter is produced by changing a dispersion medium, the content is preferably 5 to 30% by mass, and more preferably 8 to 20% by mass. The content of the pigment based on the total solid content of the dispersion as a coloring material of a color filter is preferably in the range of 30 to 60% by mass, more preferably in the range of 33 to 60% by mass, and still more preferably in the range of 35 to 50% by mass. By setting the pigment content within the above range, green (G) color pixels having good chromaticity and high color purity can be produced.

(Pigment fine particles)

The average particle diameter of the primary particles of the pigment fine particles made of the compound represented by formula (1), which are contained in the dispersion of the present invention, is preferably 10 nm or more and 50 nm or less.
The average particle diameter of the secondary particles generated by aggregation of the primary particles is preferably 10 nm or more and 70 nm or less, and the particle size distribution is 30% or less. With respect to the fine particles of a specific pigment species described above, by setting the average particle diameter of the secondary particles within the above range, a dispersion with high transmission can be produced, and as a result, the contrast can be increased. Further, by setting the particle size distribution of the secondary particles less than the upper limit described above, the surface of the secondary particles can be coated with a small amount of dispersant. As a result, a dispersion having low viscosity and high stability can be produced. Further, by setting the average particle diameter of the primary particles of the pigment fine particles within the above range, the primary particles can be micronized to nanometer scale, thus the particle diameter of the secondary particles can be also micronized. Hereinafter, measurement of the particle diameter of the primary particles and measurement of the particle diameter of the secondary particles are described in detail.

o With respect to measurement of particle diameter of primary particles

The average particle diameter of the primary particles described above is evaluated based on the equivalent diameter of the circle which has the same area as the projection image of a particle in a photographic image, which is observed and taken by electron microscope (trade name: JEM-1200EX, manufactured by JEOL Ltd.), unless otherwise specified. Specifically, the equivalent diameter of the circle is calculated for 200 particles and the number average value of the diameter is taken as the average particle diameter of the primary particles. In the dispersion of the present invention, the average particle diameter of the primary particles, which are the fine particles made of the compound represented by formula (1), is preferably in the range described above, more preferably in the range of 10 nm to 50 nm, and still more preferably in the range of 10 nm to 20 nm.
The particle size distribution of the primary particles is preferably 50% or less, more preferably 30% or less, and still more preferably 20% or less. When the particle size distribution is not within the range, particle size distribution of the secondary particles increases to yield a dispersion having high viscosity and poor stability.

o With respect to measurement of particle diameter of secondary particles

In the present invention, the particle diameter of the secondary particles is determined by measuring a dispersion with a pigment concentration of 15% by weight using a dynamic light scattering measuring apparatus having a Mach-Zehnder type interferometer and a low-coherence light source, unless otherwise specified. Specifically, the measurement is preferably carried out by using a dynamic light scattering measuring apparatus which has a means for splitting a single light generated from a low-coherence light source into two pieces of light and a means for combining one split light as a reference light and the other split light as a scattered light after passing through a medium containing particles.
FIG. 1 is a schematic diagram illustrating a configuration of a dynamic light-scattering measuring apparatus in which a Mach-Zehnder interferometer is used. A low-coherence light source (SLD; Super Luminescent Diode) 1 is used as a light source of a dynamic light-scattering measuring apparatus 10. The dynamic light-scattering measuring apparatus 10 includes optical fibers (optical propagation paths) $F_1$, $F_2$, $F_3$, $F_4$, $F_5$, $F_6$, and $F_7$; a photocoupler (optical branching mechanism) 3; collimator lenses (joint device between fiber and air in optical propagation path) 6a, 6b, and 6c; a phase modulator (modulator) 7; a circulator (optical path changing device, light coming from optical fiber $F_3$ is passed through optical fiber $F_4$ while light coming from optical fiber $F_4$ is led to optical fiber $F_6$) 2; an objective lens (light collecting device) 12; a scattering medium sample S (particles $s_1$ are contained in a medium $s_2$); a photocoupler (optical joint mechanism) 4; a balance detector (detector) 5; a BNC cable (electric cable) C; an A/D board (electric signal reading unit) 8; and a personal computer (PC) (data processing and analyzing unit) 9.
There is no particular limitation to a wavelength of the light emitted from the SLD light source 1 used in the present embodiment. For example, the wavelength preferably ranges from 0.125 to 2 $\mu$m, and more preferably from 0.250 to 1.5 $\mu$m. For example, a spatial propagation technique may be used instead of the optical fibers $F_1$ to $F_7$. A branching ratio of the photocoupler 3 can be changed according to a measuring object. A phase modulating unit 17 including the collimator lenses 6a and 6b and the modulator 7 may have either a mechanism that modulates the light in the space or a mechanism that modulates the light in the fiber. Alternatively, the phase modulating unit 17 may include the circulator 2, the optical fiber $F_4$, and the objective lens 12, which are used in the other optical path, and the sample (scattering medium) S may be modulated by replacing with a mirror that can be oscillated. The objective lens 12 can be changed according to the measuring system. The objective lens needs not to be used for the large particle size. An attenuator may be interposed between the optical fiber $F_2$ and the optical fiber $F_5$ to adjust a light amount if needed.

The A/D board 8 and the PC 9 can be replaced with a spectrum analyzer or the like. A coupler having a ratio of 1:1 can be used as the circulator 2, and an incident optical path and an output optical path can be separated from each other.

The light emitted from the low-coherence light source 1 is incident to the photocoupler 3 after propagating through the optical fiber $F_1$ and the light is divided into two pieces of light by the photocoupler 3. One of the divided pieces of light is formed into a parallel light through the optical fiber $F_2$ by the collimator lens 6a, enters the optical fiber $F_5$ through the phase modulator 7 by the collimator lens 6b, and reaches the photocoupler 4 through the optical fiber $F_5$. One of the divided pieces of light is referred to as "reference light". Assuming that $d_{ref}$ is an optical path length of one way from the photocoupler 3 to the photocoupler 4, the optical path of the reference light has the optical path length $d_{ref}$.

The other piece of light divided by the photocoupler 3 is passed through the optical fiber $F_3$, passed through the optical fiber $F_4$ by the circulator 2, formed into a parallel light by the collimator 6c, and caused to be incident to the scattering medium S in the sample cell by the collector 12. The back scattering light from the scattering medium is passed through the collector 12, the collimator lens 6c, and the optical fiber $F_4$ again and caused to be incident to the photocoupler 4 through the optical fiber $F_6$ by the circulator 2. The other piece of light is referred to as "scattering light". When $d_{sca}$ is defined as the sum of an optical path length $d_1$ (how far in the scattering medium may be defined depending on the measuring condition or measuring object and, for example, the optical path length to a focusing position can be determined) from the photocoupler 3 to a point at which the scattering occurs in the scattering medium S and an optical path length $d_2$ to the photocoupler 4 from the point at which the scattering occurs in the scattering medium S, the optical path of the scattering light has the optical path length $d_{sca} = d_1 + d_2$.

The reference light and scattering light, which are incident to the photocoupler 4, are incident to the light-receiving diode (PD; Photo Detector) 5 through the optical fiber $F_7$, electric conversion signals of the reference light and scattering light are passed through the BNC cable C, and a power spectrum of light interfering intensity is output on the personal computer 9 through the A/D board 8. The power spectrum is referred to as "heterodyne spectrum". On the other hand, a power spectrum, which is obtained by detecting intensity of only the scattering light while the optical path of the reference light is blocked, is referred to as "homodyne spectrum". The coherence function of the low-coherence light source, the power spectrum of the interfering light intensity, and the scattering light spectrum, which are associated with the sequences of pieces of measurement and computations, can be referred to in detail by JP-A-2005-121600.

An embodiment of the measuring apparatus and measuring method in the present invention is not limited to the above embodiment. For example, a space propagation type interferometer may be used instead of the interferometer in which the optical fiber is used. Additionally, various changes can be made.

The average particle diameter of the secondary particles in the dispersion of the present invention is preferably within the range described above, more preferably 10 to 70 nm, and still more preferably 10 to 30 nm. Further, the particle size distribution of the secondary particles in the dispersion of the present invention is preferably 0 to 30%, and more preferably 0 to 20%.

The pigment fine particles of the present invention may consist of one type of pigment or two or more types of pigment. Further, the pigment fine particles may contain an agent other than the pigment. For example, pigment complex fine particles may be formed by incorporating a dispersant or the like described below within the pigment fine particles. According to the re-precipitation method, fine particles can be formed at these molecular levels, and therefore the method is desirable. Meanwhile, the expression "fine particles made of the compound represented by formula (1)" means that an additional pigment or agent may be included in the fine particles within the range that the function effect of the present invention is exhibited.

<Pigment dispersant>

It is preferable that a pigment dispersant containing an amino group is used in combination in the dispersion of the present invention. By doing this, high dispersion performance can be obtained and the effect can be exhibited with a small amount. That is to say, by using the halogenated metal phthalocyanine of the present invention and the pigment dispersant containing an amino group in combination, the amount of the pigment and pigment dispersant in a dispersion can be reduced, and as a result, a coating liquid can be designed with more freedom. Further, when the pigment concentration is lowered, image breaking out (pattern linearity) and adhesion of a cover film can be improved. Preferred examples of the pigment dispersant containing an amino group include a compound represented by the following formula (2) or (3).

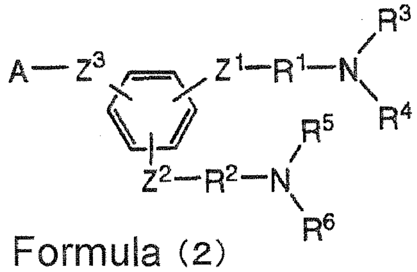

Formula (2)

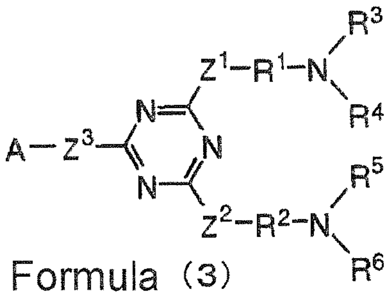

Formula (3)

In the formula, A represents a hydrogen atom, an alkyl group or an aralkyl group which may have a substituent group, or a pigment residue; $Z^1$, $Z^2$ and $Z^3$ each independently represent a single bond, -$NR^{10}$-, -O-, -S-, -$CO_2$-, -CONH-, or -$SO_2$NH-. Further, $R^{10}$ represents a hydrogen atom or an alkyl group; $R^1$ and $R^2$ each independently represent an alkylene group which may have an ether bond; $R^3$ to $R^6$ each independently represent a hydrogen atom or an alkyl group or an aralkyl group which may have a substituent group; $R^3$ and $R^4$, as well as $R^5$ and $R^6$ may bind to each other to form a 5- to 6-membered saturated ring which contains a nitrogen atom; and the saturated ring may contain an atom selected from an oxygen atom, a sulfur atom, and a nitrogen atom.

In the formula, A represents a hydrogen atom, an alkyl group or an aralkyl group which may have a substituent group, or a pigment residue. The alkyl group may be unsubstituted or may have a substituent group, and it is preferably an alkyl group having 1 to 20 total carbon atoms. Preferred examples of the substituent group include a hydroxyl group, an alkoxy group, a halogen atom, and an alkyloyloxy group. Specific examples thereof include a methyl group, an ethyl group, an n-butyl group, a 2-ethylhexyl group, an octadecyl group, and a 2-(2'-methoxyethoxy)ethoxy group.

The aralkyl group may be unsubstituted or may have a substituent group, and it is preferably an aralkyl group having 7 to 15 total carbon atoms. Preferred examples of the substituent include a hydroxyl group, an alkoxy group, a halogen atom, and an alkyloyloxy group. Specific examples thereof include a benzyl group. Further, the pigment residue indicates a pigment molecule from which one of the hydrogen atoms is removed, and examples thereof include a pigment residue represented by the following formula (A1).

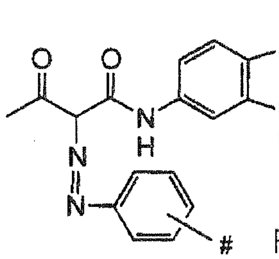

Formula (A1)

In formula (A1), # represents that one of the hydrogen atoms is removed from the phenyl group. Preferred examples of A include an alkyl group or an aralkyl group having 1 to 10 total carbon atoms which may have a substituent group, or a pigment residue, more preferably a pigment residue, and still more preferably an azo pigment residue.

Preferred examples of the alkyl group as $R^{10}$ in $Z^1$, $Z^2$, and $Z^3$ include an alkyl group having 1 to 8 total carbon atoms, for example, a methyl group and an n-butyl group. Of these, as $Z^1$, $Z^2$, and $Z^3$, -$NR^{10}$-, -O-, or -CONH- are preferable and -NH- or -CONH- are more preferable.

Preferred examples of $R^1$ and $R^2$ include an ethylene group, a propylene group, and an ethylene oxyethylene group. Of these, an alkylene group having I to 10 total carbon atoms which may have an ether bond is preferable, and an alkylene group having 1 to 6 total carbon atoms is more preferable.

Preferred examples of the alkyl group as $R^3$ to $R^6$ include an alkyl group having 1 to 8 total carbon atoms, and a methyl group, an ethyl group, and an n-octyl group can be preferably exemplified. Further, preferred examples of the aralkyl group include an aralkyl group having 7 to 12 total carbon atoms, for example, a benzyl group can be preferably exemplified. Preferred examples of the substituent group include a hydroxyl group, an alkoxy group, a halogen atom, and an alkyloyloxy group. Of these, an alkyl group having 1 to 6 total carbon atoms is preferred as $R^3$ to $R^6$, and it is also preferable that $R^3$ and $R^4$, as well as $R^5$ and $R^6$ may bind to each other to form a 5- to 6-membered saturated ring which contains a nitrogen atom (e.g., a pyrrolidine ring, a piperidine ring, a piperazine ring, and a morpholine ring), and an alkyl group having 1 to 3 total carbon atoms (e.g., a methyl group, an ethyl group, and a propyl group) is more preferable.

Among those described above, as a compound represented by formula (2), it is particularly preferable that A

is an azo pigment residue, $Z^1$, $Z^2$, and $Z^3$ are -CONH-, $R^1$ and $R^2$ are an alkylene group having 1 to 4 total carbon atoms, and $R^3$ to $R^6$ are an alkyl group having 1 to 4 total carbon atoms.

Further, as a compound represented by formula (3), it is particularly preferable that A is an azo pigment residue, $Z^1$, $Z^2$, and $Z^3$ are -NH-, $R^1$ and $R^2$ are an alkylene group having 1 to 4 carbon atoms, and $R^3$ to $R^6$ are an alkyl group having 1 to 4 total carbon atoms. Specific examples thereof are described below.

a-1

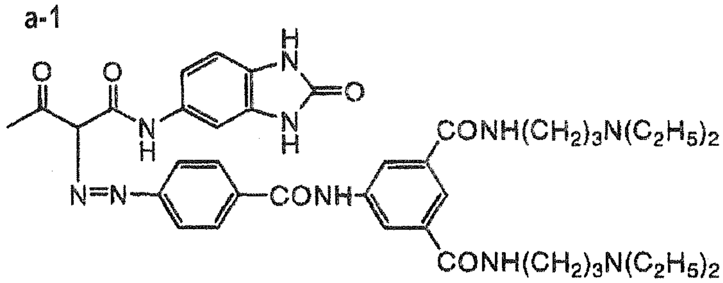

a-2

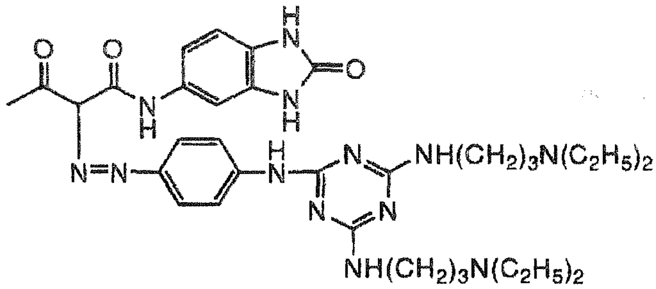

The content of the pigment dispersant in the dispersion of the present invention is, although not specifically limited, preferably 5% by mass or more and 30% by mass or less based on the pigment. By setting the content of the pigment dispersant within the above range, a pattern with excellent linearity can be formed. Further, a dispersant which is preferably used in combination for the dispersion of the present invention preferably coexists when the fine particles are produced by the re-precipitation method described below. Further, it is more preferable that the dispersant is contained in advance in a good solvent or a poor solvent. More preferably, it is contained in advance in the good solvent.

<Re-precipitation>

The pigment fine particles made of a compound represented by formula (1), which are included in the dispersion of the present invention, are preferably produced by contacting a solution containing the pigment dissolved in a good solvent (first solvent) with a poor solvent (second solvent). The compatibility between the good solvent , which dissolves the pigment, and the poor solvent is such that the solubility of the good solvent in the poor solvent is preferably 30 mass% or more, more preferably 50 mass% or more. The solubility of the good solvent in the poor solvent has no particular upper limit, but it is practical that the solvents can mix with each other at an arbitrary ratio.

o Good Solvent

The good solvent is not particularly limited. Preferred examples thereof include organic acids (e.g., formic acid, dichloroacetic acid, and methansulfonic acid), organic bases (e.g., diazabicycloundecene (DBU), tetrabutylammonium hydroxide, and sodium methoxide), aqueous solvents (e.g., water, hydrochloric acid, and aqueous sodium hydroxide solution), alcoholic solvents (e.g., methanol, ethanol, and n-propanol), ketone-series solvents (e.g., methyl ethyl ketone, methyl isobutyl ketone, and cyclohexanone), ether-series solvents (e.g., tetrahydrofuran, propylene glycol monomethyl ether, and propylene glycol monomethyl ether acetate), sulfoxide-series solvents (e.g., dimethyl sulfoxide, hexamethylene sulfoxide, and sulfolane), ester-series solvents (e.g., ethyl acetate, n-butyl acetate, and ethyl lactate), amide-series solvents (e.g., N,N-dimethylformamide, and 1-methyl-2-pyrrolidone), aromatic hydrocarbon-series solvents (e.g., toluene and xylene), aliphatic hydrocarbon-series solvents (e.g., octane), nitrile-series solvents (e.g., acetonitrile), halogen-series solvents (e.g., carbon tetrachloride, and dichloromethane), ionic liquids (e.g., 1-ethyl-3-methylimidazolium tetrafluoroborate), carbon disulfide solvents, and mixed solvents thereof.

Among these, organic acids, organic bases, aqueous solvents, alcoholic solvents, ketone-series solvents, ether-series solvents, sulfoxide-series solvents, ester-series solvents, amide-series solvents, or mixed solvents thereof are preferable; and organic acids, organic bases, sulfoxide-series solvents, amide-series solvents, or mixed solvents thereof are particularly preferable. Among them, sulfoxide-series solvents are preferable. Specific examples thereof include dimethyl sulfoxide, diethyl sulfoxide, hexamethylene sulfoxide, and sulfolane. Dimethyl sulfoxide is particularly preferable.

Examples of the inorganic salts that are added to the good solvent include inorganic salts like lithium hydroxide, sodium hydroxide, potassium hydroxide, calcium hydroxide, and barium hydroxide. The amount of the base to be used is not particularly limited. However, in the case of the inorganic base, the amount thereof is preferably from 1.0 to 30 molar equivalents, more preferably from 1.0 to 25 molar equivalents, and further preferably from 1.0 to 20 molar equivalents, to the organic pigment. In the case of the organic base, the amount thereof is preferably from 1.0 to 100 molar equivalents, more preferably from 5.0 to 100 molar equivalents, and further preferably from 20 to 100 molar equivalents, to the organic pigment.

Examples of the organic base (the organic compound having a basic group) include an alkylamine, an arylamine, an aralkylamine, a pyrazole derivative, an imidazole derivative, a triazole derivative, a tetrazole derivative, an oxazole derivative, a thiazole derivative, a pyridine derivative, a pyridazine derivative, a pyrimidine derivative, a pyrazine derivative, a triazine derivative and the like. Preferred examples include an alkylamine, an arylamine, and an imidazole derivative. Further, an organic compound consisting of a basic group and a heterocyclic group can also be preferably added.

As an acid used when the pigment is dissolved in an acidic condition, an inorganic acid such as sulfuric acid, hydrochloric acid or phosphoric acid can also be used in addition to the organic acids mentioned above. The amount of the acid to be used is not particularly limited, but in many cases, the acid is used in a larger or more excessive amount than the base. The amount of the acid to be used is preferably from 3 to 500 molar equivalents, more preferably from 10 to 500 molar equivalents, and further preferably from 30 to 200 molar equivalents, to the organic pigment.

The viscosity of the pigment solution in which a compound represented by formula (1) is dissolved in a good solvent is preferably adjusted in the range of from 0.5 to 100.0 mPa·s, and more preferably from 1.0 to 50.0 mPa·s.

In addition to the compounds mentioned above, pigment derivatives described in JP-A-2007-9096, JP-A-7-331182 and the like may be mentioned. A pigment derivative as used herein refers to a pigment derivative type compound that is derived from an organic pigment as a parent substance and is produced by chemically modifying the parent structure, or a pigment derivative type compound obtained by a pigmentization reaction of a chemically modified pigment precursor. Commercially available products include, for example, "EFKA6745 (phthalocyanine derivative)" manufactured by EFKA Chemicals GmbH, "Solsperse 5000 (phthalocyanine derivative)" manufactured by Lubrizol Corp., and the like (all trade names). When a pigment derivative is used, the amount of use is preferably in the range of 0.5 to 30% by mass, more preferably in the range of 3 to 20% by mass, and particularly preferably in the range of 5 to 15% by mass, to the pigment.

o Poor Solvent

The poor solvent is not particularly limited. The solubility of the pigment in the poor solvent is preferably 0.02 mass% or less, more preferably 0.01 mass% or less. The solubility of the organic pigment in the poor solvent has no particular lower limit, but it is practical that the solubility is 0.0001 mass% or more, in consideration of a pigment to be ordinarily used.

The poor solvent is not particularly limited. Preferred examples thereof include aqueous solvents (e.g., water, hydrochloric acid, and aqueous sodium hydroxide solution), alcoholic solvents (e.g., methanol, ethanol, and n-propanol), ketone-series solvents (e.g., methyl ethyl ketone, methyl isobutyl ketone, and cyclohexanone), ether-series solvents (e.g., tetrahydrofuran, propylene glycol monomethyl ether, and propylene glycol monomethyl ether acetate), sulfoxide-series solvents (e.g., dimethyl sulfoxide, hexamethylene sulfoxide, and sulfolane), ester-series solvents (e.g., ethyl acetate, n-butyl acetate, and ethyl lactate), amide-series solvents (e.g., N,N-dimethylformamide, and 1-methyl-2-pyrrolidone), aromatic hydrocarbon-series solvents (e.g., toluene and xylene), aliphatic hydrocarbon-series solvents (e.g., octane), nitrile-series solvents (e.g., acetonitrile), halogen-series solvents (e.g., carbon tetrachloride, and dichloromethane), ionic liquids (e.g., 1-ethyl-3-methylimidazolium tetrafluoroborate), carbon disulfide solvents, and mixed solvents thereof.

Among these, aqueous solvents, alcoholic solvents, ketone-series solvents, sulfoxide-series solvents, ester-series solvents, amide-series solvents, nitrile-series solvents, and mixed solvents thereof are more preferable; and aqueous solvents, alcoholic solvents, and mixed solvents thereof are particularly preferable.

The "aqueous medium" refers to water alone, or a mixed solution of water and a water-soluble organic solvent and/or inorganic salt. Examples thereof include water, hydrochloric acid, aqueous sodium hydroxide solution and aqueous

potassium hydroxide solution.
Examples of the alcoholic solvents include methanol, ethanol, isopropyl alcohol, n-propyl alcohol, and 1-methoxy-2-propanol.

The above-described examples of the good solvent and those of the poor solvents overlap, but the identical solvent is not selected for both the good solvent and the poor solvent. Any solvents may be used in combination of them as long as each pigment shows solubility in the good solvent sufficiently higher than that in the poor solvent. In regard to the pigment, for example, the difference in solubility between in the good solvent and in the poor solvent is preferably 0.2 mass% or more, and more preferably 0.5 mass% or more. There is no particular upper limit to the difference in solubility between the good solvent and the poor solvent. However, when ordinarily used pigments are taken into consideration, it is practical that the upper limit is 50 mass% or less.

The condition of the poor solvent is not particularly restricted, and can be selected from the range from a normal pressure condition to a subcritical or supercritical condition. The temperature at which the organic particles are formed under normal pressure is preferably -30°C to 100°C, more preferably -10°C to 60°C, and particularly preferably 0°C to 30°C. The viscosity of the pigment solution is preferably in the range of from 0.5 to 100.0 mPa·s, and more preferably from 1.0 to 50.0 mPa·s.

<Precipitation>

The preparation condition under which the fine particles are precipitated is not particularly restricted, and can be selected from the range from a normal pressure condition to a subcritical or supercritical condition. The temperature in the case where the fine particles are precipitated under normal pressure is preferably -10°C to 150°C, more preferably -5°C to 130°C, and particularly preferably 0°C to 100°C.

When the pigment solution and the poor solvent are mixed, mixing may be carried out by adding any of the two liquids. However, it is preferable to perform mixing by jet-flowing the pigment solution into the poor solvent, and at that time, it is preferable that the poor solvent is in a stirred state. The stirring rate is preferably 100 to 10,000 rpm, more preferably 150 to 8,000 rpm, and particularly preferably 200 to 6,000 rpm. A pump or the like may be or may not be used for adding. As the adding method, a method of adding a liquid inside the other liquid or a method of adding a liquid outside the other liquid may be used; a method of adding a liquid inside the other liquid is preferable. Further, it is preferred that one of the liquids is successively fed into the other liquid through a feed pipe using a pump. The inner diameter of the feed pipe is preferably in the range of from 0.1 mm to 200 mm, and more preferably from 0.2 mm to 100 mm. The speed fed from the feed pipe into the other liquid is preferably in the range of from 1 to 10,000 mL/min, and more preferably from 5 to 5,000 mL/min.

Upon mixing the pigment solution and the poor solvent, the particle size of the pigment nanoparticles that are produced by precipitation can be controlled by regulating the Reynolds number. Here, the Reynolds number is a dimensionless number representing the flow state of a fluid and is represented by the following expression.

$$Re = \rho UL/\mu \quad \cdots \text{expression (1)}$$

wherein Re represents the Reynolds number; ρ represents a density (kg/m$^3$) of the organic pigment solution; U represents a relative velocity (m/s) at which the pigment solution comes in contact with the poor solvent; L represents an equivalent diameter (m) of a flow path or a supply inlet at a part where the pigment solution comes in contact with the poor solvent; and μ represents a viscosity coefficient (Pa·s) of the organic pigment solution.

The equivalent diameter L refers to the diameter of an equivalent cylindrical tube when a cylindrical tube which is equivalent to the opening diameter or the flow channel of a pipe having an arbitrary cross-section shape is envisaged. The equivalent diameter L is represented by the following expression (2), in which the cross-section of the pipe is designated as A and the wetted perimeter (circumference) of the pipe or the outer perimeter of the flow channel is designated as p.

$$L = 4A/p \quad \cdots \text{expression (2)}$$

It is preferable to form particles by injecting the pigment solution into the poor solvent through a pipe, and when a circular tube is used as the pipe, the equivalent diameter coincides with the diameter of the circular tube. For example, the equivalent diameter can be adjusted by varying the opening diameter of the liquid supply inlet. The value of the equivalent diameter L is not particularly limited, but for example, the equivalent diameter is identical in meaning with a preferred inner diameter of the supply inlet.

The relative velocity U at which the pigment solution comes in contact with the poor solvent is defined as the relative velocity in a direction perpendicular to the plane of the part where the two liquids come in contact. That is, for example, in the case of mixing by injecting the pigment solution into the poor solvent which is stationary, the velocity of injecting from the supply inlet is identical to the relative velocity U. The value of the relative velocity U is not particularly limited, but for example, the value is preferably set at 0.5 to 100 m/s, and more preferably at 1.0 to 50 m/s.

The density ρ of the pigment solution is a value that is determined by the type of the selected material, but it is practical that p is, for example, 0.8 to 2.0 kg/$m^3$. Furthermore, the coefficient of viscosity μ of the pigment solution is also a value that is determined by the material used, the environment temperature or the like, but its preferred range is identical with a preferred velocity of the pigment solution as stated above.

A smaller value of Reynolds number (Re) is likely to form a laminar flow, and a larger value is likely to form a turbulent flow. For example, the particle size of the pigment nanoparticles may be obtained under control by adjusting the Reynolds number to be 60 or more, and it is preferable to adjust the Reynolds number to 100 or more, and more preferably to 150 or more. The Reynolds number has no particular upper limit, but favorable pigment nanoparticles can be obtained under control by adjusting the Reynolds number, for example, to the range of 100,000 or less, which is preferable. Alternatively, the conditions may be adjusted such that the Reynolds number is increased so that the average particle size of the obtainable nanoparticles would be 60 nm or less. In this case, within the range mentioned above, pigment nanoparticles having a smaller particle size can be obtained under control usually by increasing the Reynolds number.

The mixing ratio of the pigment solution and the poor solvent is preferably in the range of from 1/50 to 2/3, more preferably from 1/40 to 1/2, and particularly preferably from 1/20 to 3/8, in terms of volume ratio. The particle concentration in the liquid when organic fine particles are precipitated is not particularly limited, but the organic particle concentration is preferably in the range of 10 to 40,000 mg, more preferably in the range of 20 to 30,000 mg, and particularly preferably in the range of 50 to 25,000 mg, to 1,000 ml of the solvent. There is no particular limitation to the scale of production at the time when the fine particles are produced. However, it is preferred that the production scale is such that the amount of the poor solvent to be mixed is preferably from 10 to 2,000 L, and more preferably from 50 to 1,000 L.

Further, as for the re-precipitation, a method which is conventionally known in the field may be employed and references can be made to JP-A-2007-262378, JP-A-2004-43776, and JP-A-2003-113341, for example.

<Concentration/Re-dispersion>

Immediately after the re-precipitation, the dispersion of the present invention typically contains a large amount of water as the poor solvent (second solvent) and a considerable amount of the good solvent (first solvent) for dissolving the pigment. Thus, it is preferable to add a third solvent or replace them with the third solvent. The time for adding the third solvent or replacing with the third solvent is not particularly limited as long as the addition is performed after the precipitation of pigment fine particles, but the third solvent may be added to the mixed liquid from which the pigment fine particles have been precipitated; or may be added after removing a portion of the solvent fraction of the mixed liquid; or may be added after all of the solvent is eliminated (concentrated). That is, the third solvent is used as a solvent for replacement, and the solvent fraction formed by the good solvent and the poor solvent in the dispersion from which the pigment fine particles have been precipitated, can be replaced with the third solvent. Alternatively, the third solvent may be added after the good solvent and the poor solvent are completely removed (concentrated) to take out the organic particles as a pigment particle powder.

Furthermore, in the case of obtaining a pigment dispersion composition having a desired composition of the components, a first solvent fraction removal process (first removal) may be conducted, and then the third solvent is added to replace the solvent. The solvent fraction may be removed by a removal process for a second solvent fraction (second removal), and the residue may be made into a powder. Subsequently, a pigment dispersant and/or a solvent may be added to produce a desired pigment dispersion composition. Alternatively, the good solvent and the poor solvent can be completely removed (concentrated), the residue is taken out as a pigment particle powder, and then the third solvent and/or a pigment dispersant can be added to produce a desired pigment dispersion composition.

The removal process for a solvent fraction from the mixed liquid after the precipitation of the pigment fine particles is not particularly limited, but there may be mentioned, for example, a method of filtering through a filter or the like, a method of sedimenting the pigment fine particles by centrifugation and then concentrating the fine particles, and the like. For the apparatus for filtering, for example, an apparatus such as filtration under reduced pressure or filtration under pressure can be used. Preferable examples of the filter to be used include filter paper, nano-sized filter, ultrafilter, and the like.

A centrifugal separator may be any device as long as the device can sediment pigment fine particles. Examples of the centrifugal separator include a general-purpose device, a system having a skimming function (function with which a supernatant layer is sucked during the rotation of the system, to discharge to the outside of the system), and a continuous centrifugal separator for continuously discharging solid matter. As the conditions for centrifugal separation, the centrifugal

force (a value representing a ratio of an applied centrifugal acceleration to the gravitational acceleration) is preferably 50 to 10,000, more preferably 100 to 8,000, and particularly preferably 150 to 6,000. The temperature at the time of centrifugal separation is preferably -10°C to 80°C, more preferably -5°C to 70°C, and particularly preferably 0°C to 60°C, though a preferable temperature varies depending on the kind of the solvent of the dispersion.
Furthermore, as the removal process for a solvent fraction, a method of concentrating by subliming the solvent through vacuum freeze-drying, a method of concentrating by drying the solvent under heating or under reduced pressure, a method of combining those methods, and the like can also be used.

<Solvent for re-dispersion>

Examples of the third solvent that can be suitably used include ethers, ketones, alcohols, esters, and amides. Specific examples thereof include methyl ethyl ketone, propylene glycol monomethyl ether, propylene glycol monomethyl ether acetate, cyclohexanone, methyl isobutyl ketone, cyclohexaonol, ethyl lactate, methyl lactate, and caprolactam. These solvents may be used either singly or in combination of two or more. The content of the third solvent is preferably 10% by mass or more and 95% by mass or less from the viewpoint of dispersibility.

With respect to the dispersion of the present invention obtained by re-precipitation, by adding a pre-determined agent to the dispersion with replaced solvent, a resist composition particularly suitable for producing green (G) color pixels of a color filter can be provided. Hereinafter, each agent that is preferred as a component of the resist composition is explained.

<Binder>

In the present invention, it is preferable to use an alkali-soluble binder as a binder. By doing so, it is possible to construct a photosensitive resin layer formed with the green photosensitive resin composition described above, which is developable in an aqueous alkali solution.

The alkali-soluble binder (hereinafter, also simply referred to as "binder") is preferably a polymer having a polar group such as a carboxylic acid group or a carboxylate salt group at its side chain. Examples thereof include a methacrylic acid copolymer, an acrylic acid copolymer, an itaconic acid copolymer, a crotonic acid copolymer, a maleic acid copolymer, and a partially esterified maleic acid copolymer described in, for example, JP-A-59-44615, JP-B-54-34327 ("JP-B" means examined Japanese patent publication), JP-B-58-12577, JP-B-54-25957, JP-A-59-53836, and JP-A-59-71048. The examples further include a cellulose derivative having a carboxylic acid group on its side chain. In addition to the foregoing, a product obtained by adding a cyclic acid anhydride to a polymer having a hydroxyl group can also be preferably used. In addition, particularly preferable examples of the binder include a copolymer of benzyl (meth)acrylate and (meth)acrylic acid and a multi-component copolymer of benzyl (meth)acrylate, (meth)acrylic acid, and any other monomer described in U.S. Patent No. 4,139,391. These binder polymers having a polar group may be used singly or in the form of a composition containing the binder polymer together with an ordinary film-forming polymer. The content of the binder polymer is generally from 20 to 50 mass%, preferably from 25 to 45 mass%, based on the total solid content of the green photosensitive resin composition.

<Photopolymerizable Compound>

Suitable examples of the photopolymerizable compound of the present invention include a monomer or an oligomer which has at least two polymerizable groups in the molecule. As a monomer or oligomer, it is preferable that the monomer or oligomer has two or more ethylenically unsaturated double bonds and undergoes addition-polymerization by irradiation with light. The monomer or oligomer may be a compound having at least two addition-polymerizable ethylenically unsaturated groups therein and having a boiling point of 100°C or higher at normal pressure. Examples thereof include: polyethylene glycol di(meth)acrylate, polypropylene glycol di(meth)acrylate, trimethylolethane tri(meth) acrylate, trimethylolpropane tri(meth)acrylate, trimethylolpropane di(meth)acrylate, neopentyl glycol di(meth)acrylate, pentaerythritol tetra(meth)acrylate, pentaerythritol tri(meth)acrylate, dipentaerythritol hexa(meth)acrylate, dipentaerythritol penta(meth)acrylate, hexanediol di(meth)acrylate, trimethylolpropane tri(acryloyloxypropyl)ether, tri(acryloyloxyethyl)isocyanurate, tri(acryloyloxyethyl)cyanurate, glycerin tri(meth)acrylate; a polyfunctional acrylate or polyfunctional methacrylate which may be obtained by adding ethylene oxide or propylene oxide to a polyfunctional alcohol such as trimethylolpropane or glycerin and converting the adduct into a (meth)acrylate.

Examples of the monomer and oligomer further include urethane acrylates as described in JP-B-48-41708, JP-B-50-6034, and JP-A-51-37193; and polyester acrylates as described in JP-A 48-64183, JP-B-49-43191, and JP-B-52-30490; polyfunctional acrylates or polyfunctional methacrylates such as epoxy acrylates which are reaction products of an epoxy resin and (meth)acrylic acid. Among these, trimethylolpropane tri(meth)acrylate, pentaerythritol tetra(meth) acrylate, dipentaerythritol hexa(meth)acrylate, and dipentaerythritol penta(meth)acrylate are preferable.

Further, other than the above, "polymerizable compound B" described in JP-A-11-133600 can be mentioned as a preferable example. These monomers or oligomers may be used singly or as a mixture of two or more kinds thereof. The content of the polymerizable compound is generally in the range of from 5 mass% to 50 mass%, preferably from 10 mass% to 40 mass%, based on the total solid content of the green photosensitive resin composition.

<Photopolymerization Initiator>

Examples of the photopolymerization initiator used in the present invention include vicinal polyketaldonyl compounds disclosed in U.S. Patent No. 2,367,660, acyloin ether compounds described in U.S. Patent No. 2,448,828, aromatic acyloin compounds substituted by an $\alpha$-hydrocarbon described in U.S. Patent No. 2,722,512, polynuclear quinone compounds described in U.S. Patent No. 3,046,127 and U.S. Patent No. 2,951,758, combinations of triarylimidazole dimer and p-aminoketone described in U.S. Patent No. 3,549,367, benzothiazole compounds and trihalomethyl-s-triazine compounds described in JP-B-51-48516, trihalomethyl-triazine compounds described in U.S. Patent No. 4,239,850, and trihalomethyloxadiazole compounds described in U.S. Patent No. 4,212,976. In particular, trihalomethyl-s-triazine, trihalomethyloxadiazole, and triarylimidazole dimer are preferable. In addition, "polymerization initiator C" described in JP-A-11-133600 can also be mentioned as preferable examples.

These photopolymerization initiators and photopolymerization initiator systems (combinations) may be used singly. Alternatively, a mixture of two or more selected from these photopolymerizable initiators and photopolymerization initiator systems may be used. In particular, it is preferable to use two or more kinds of photopolymerizable initiators and photopolymerization initiator systems. When two or more kinds of photopolymerizable initiators and photopolymerization initiator systems are used, the display property, particularly evenness of display, can be improved. As to the content of the photo-polymerization initiator, the content thereof is generally in the range of from 0.5 to 20 mass%, preferably from 1 to 15 mass%, based on the total solid content of the green photosensitive resin composition.

<Other additives>

In the present invention, additives such as a solvent, a surfactant, a thermal polymerization inhibitor, and a UV absorbing agent may be further added to the dispersion, in addition to the components described above. As for the additives such as the surfactant, thermal polymerization inhibitor, and UV absorbing agent, the components for constituting a colored photosensitive resin composition described in paragraphs [0010] to [0021] of JP-A-2006-23696 can be also suitably used for the present invention.

<Color filter>

For producing a color filter by using the dispersion of the present invention, a photosensitive transfer material, a slit-shaped nozzle, a color filter substrate, a process of forming a layer of green photosensitive resin composition, a coating method, a transfer method, a support, light exposure, an exposure process, a development process and other processes can be suitably employed in view of a standard method and an application thereof. For example, those described in JP-A-2008-122478, JP-A-2007-284590, and JP-A-2006-284691 can be used.

It is preferable that the color filter having green (G) color pixels which was produced using the dispersion of the present invention is excellent in the contrast. In the present invention, the contrast value of a dispersion means a value that is measured by the measurement method which is adopted in the examples below. The color filter having a high contrast enables enlarging a discrimination of brightness at the time when the color filter is combined with a liquid crystal. Therefore, the high contrast is a very important performance in enhancing replacement of CRTs by liquid crystal display devices.

In the case where the color filter is used as a color filter for a television, the difference ($\Delta$E) between the chromaticity of the red (R) photosensitive resin layer measured under an F 10 light source and the value for red shown in the following table (hereinafter, in the present invention, also simply referred to as "target chromaticity"), the difference ($\Delta$E) between the chromaticity of the green (G) photosensitive resin layer measured under the F10 light source and the target chromaticity for green shown in the following table, the difference ($\Delta$E) between the chromaticity of the blue (B) photosensitive resin layer measured under the F 10 light source and the target chromaticity for blue shown in the following table, are each preferably 5 or less, more preferably 3 or less, still more preferably 2 or less.

| | x | y | Y |
|---|---|---|---|
| R | 0.656 | 0.336 | 21.4 |
| G | 0.293 | 0.634 | 52.1 |

(continued)

| | x | y | Y |
|---|---|---|---|
| B | 0.146 | 0.088 | 6.90 |

Herein, chromaticity in the present invention is measured by a microscopic spectrophotometer (OSP100 or 200, manufactured by OLYMPUS CORPORATION) and expressed in terms of xyY values of the xyz color system obtained by calculation as a result under an F10-light source at 2-degree viewing angle. In addition, the difference from the target chromaticity is expressed in terms of a color difference of a La*b* color system.

A liquid crystal display device equipped with the color filter has high contrast and excellent definition such as black depth, and particularly, the liquid crystal display device is preferably of VA mode. The liquid crystal display device of the present invention can be suitably used also as a large screen liquid crystal display device such as a display for a notebook computer and a television monitor. The color filter of the present invention can be used in CCD devices, and exhibits excellent performance.

<Display Device>

A display device mounted with a color filter which is produced by using the dispersion of the present invention is not specifically limited. Examples of the display device include a liquid crystal display device, a plasma display device, an EL display device, a CRT display device and the like. The definition of display devices and explanations of each display device are described in, for example, "Electronic Display Device (authored by Akio Sasaki, and published by Kogyo Chosakai Publishing Inc., in 1990)", and "Display Devices (authored by Naotaka Ibuki, and published by Sangyo Tosho in 1989)". Among these, the liquid crystal display device is particularly preferable. Liquid crystal display devices are described in, for example, "Next-Generation Liquid Crystal Display Technology (edited by Tatsuo Uchida, and published by Kogyo Chosakai Publishing Inc., in 1994)".

EXAMPLES

(Example 1)

Pigment dispersant A and pigment derivative A that are used for each of the following Examples and Comparative examples are represented by the following formula (n is an integer of 1 to 5).

Pigment dispersant A

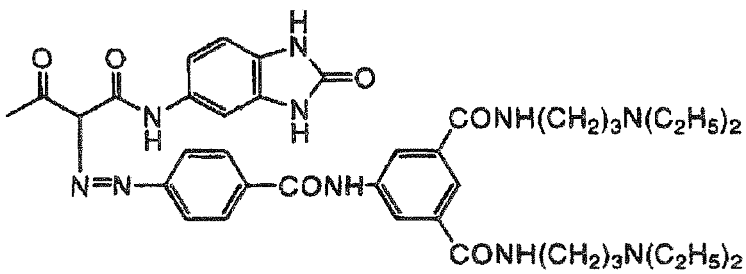

Pigment derivative A

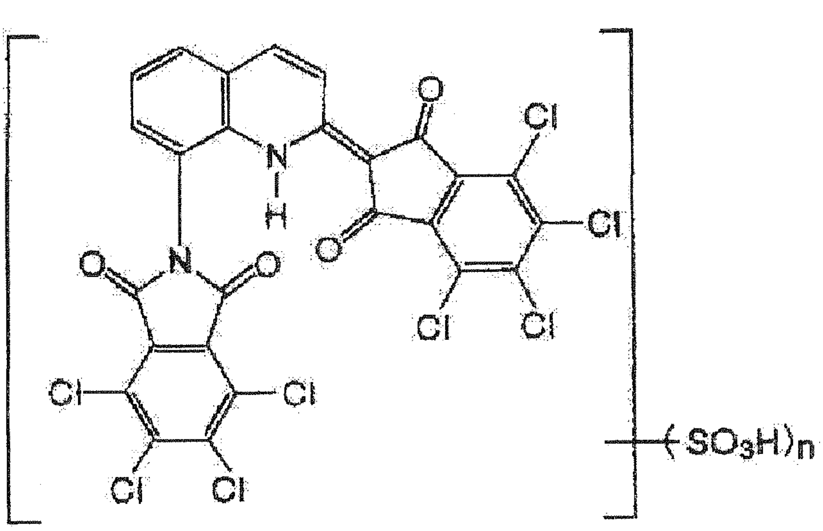

<Preparation of dispersion of organic pigment nanoparticles>

In 1,000 g of dimethyl sulfoxide (manufactured by Wako Pure Chemical Industries, Ltd.), 50 g of C.I. Pigment Green 58 (the average composition: $ZnPcBr_{13}Cl_3$) was dispersed. Then, 52.3 g of 28% methanol solution of sodium methoxide was added to the resultant mixture to produce a pigment solution A. The viscosity of the pigment solution A, as determined by using Viscomate VM-10A-L (trade name, manufactured by CBC Materials), was 14.3 mPa·s, when the solution temperature of the pigment solution was 24.5°C. Separately, 1,000 mL of water containing 160 g of 1-mol/L hydrochloric acid (manufactured by Wako Pure Chemical Industries, Ltd.) was prepared as a poor solvent
100 ml of the pigment solution A was fed using an NP-KX-500 type large-volume nonpulsating pump (trade name, manufactured by Nihon Seimitsu Kagaku Co., Ltd.), from a liquid transport pipe having a flow channel diameter of 1.1 mm at a flow rate of 400 ml/min into 1,000 ml of water as the poor solvent controlled to a temperature of 10°C and being stirred at 500 rpm by a GK-0222-10 Ramond stirrer (trade name, manufactured by Fujisawa Pharmaceutical Co., Ltd.), thereby forming organic pigment particles, to give a dispersion A of organic pigment nanoparticles.

<Preparation of dispersion of organic pigment>

The dispersion A of organic pigment nanoparticles prepared according to the order described above was concentrated for 90 min at 5,000 rpm by using centrifugal filter H-112 (trade name, manufactured by KOKUSAN Co., Ltd.) and P89C (trade name, manufactured by Shikishima Canvas Co., Ltd.) type filter cloth. The resulting paste was washed with water until the salts were removed and recovered as a paste A containing concentrated organic pigment nanoparticles.
The paste A containing concentrated organic pigment nanoparticles was subjected to three-fold dilution with propylene glycol monomethyl ether acetate, and concentrated for 90 min at 1,400 rpm by using centrifugal filter H-112 (trade name, manufactured by KOKUSAN Co., Ltd.) and P89C (trade name, manufactured by Shikishima Canvas Co., Ltd.) type filter cloth. This process was repeatedly carried out until the water content is 1% or less to obtain the paste A containing concentrated organic pigment nanoparticles (concentration of nanoparticles: 21.2%).
By using the paste A containing concentrated organic pigment nanoparticles, an organic pigment dispersion composition A having the following composition was prepared.

| | |
|---|---|
| Paste A containing concentrated organic pigment nanoparticles | 66.0 g |
| Pigment dispersant A | 5.4 g |
| Pigment derivative A | 3.9g |
| Propylene glycol monomethyl ether acetate | 34.7 g |

The organic pigment dispersion composition having the above composition was dispersed with a motor mill M-50 (manufactured by Eiger Japan K.K.) using zirconia beads having a diameter of 0.5 mm at a rotating speed of 2000 rpm for 1

hour, subsequently using zirconia beads having a diameter of 0.1 mm at a rotating speed of 2000 rpm for 4 hours. Thus, the organic pigment dispersion composition A was obtained.

(Example 2)

In preparing dispersion of organic pigment nanoparticles, a dispersion B of organic pigment nanoparticles was prepared in the same manner as the Example 1. To the dispersion B of organic pigment nanoparticles (concentration of nano pigment: about 0.5% by mass), 500 mL of propylene glycol monomethyl ether acetate was added and stirred for 10 min at 25°C and at a rotating speed of 500 rpm. The mixture was kept for one day and the nano pigment was extracted into a propylene glycol monomethyl ether acetate phase to give a paste B containing concentrated organic pigment nanoparticles.
By using the paste B containing concentrated organic pigment nanoparticles, an organic pigment dispersion composition B having the following composition was prepared.

| | |
|---|---|
| Paste B containing concentrated organic pigment nanoparticles | 60.6 g |
| Pigment dispersant A | 5.4 g |
| Pigment derivative A | 3.9 g |
| Propylene glycol monomethyl ether acetate | 30.1 g |

The organic pigment dispersion composition having the above composition was dispersed with a motor mill M-50 (manufactured by Eiger Japan K.K.) using zirconia beads having a diameter of 0.5 mm at a rotating speed of 2000 rpm for 1 hour, subsequently using zirconia beads having a diameter of 0.1 mm at a rotating speed of 2000 rpm for 4 hours. Thus, the organic pigment dispersion composition B was obtained.

(Comparative Example 1)

100 g of C.I. Pigment Green 58 (the average composition: $ZnPcBr_{13}Cl_3$), 700 g of pulverized sodium chloride, 160 g of diethylene glycol, and 9 g of xylene were added into a two-arm type kneader and kneaded for four hours at 100°C. After kneading, the mixture was drawn into 10,000 g of water at 80°C from the kneader, stirred for one hour and then filtrated. The filtrated substance was washed with hot water at 80°C, dried at 90°C, and pulverized by a hammer mill to give pigment powder C.
An organic pigment dispersion composition C having the following composition, using the pigment powder C, was produced.

| | |
|---|---|
| Pigment powder C | 11.1 g |
| Pigment dispersant A | 5.4 g |
| Pigment derivative A | 3.9 g |
| Propylene glycol monomethyl ether acetate | 79.6 g |

The organic pigment dispersion composition having the above composition was dispersed with a motor mill M-50 (manufactured by Eiger Japan K.K.) using zirconia beads having a diameter of 0.5 mm at a rotating speed of 2000 rpm for 1 hour, subsequently using zirconia beads having a diameter of 0.1 mm at a rotating speed of 2000 rpm for 4 hours. Thus, the organic pigment dispersion composition C was obtained.

(Comparative Example 2)

By using C.I. Pigment Green 58 (FASTGEN Green A110, trade name, DIC Corporation), an organic pigment dispersion composition D having the following composition was prepared.

| | |
|---|---|
| FASTGEN Green A110 | 11.1 g |
| Pigment dispersant A | 5.4 g |
| Pigment derivative A | 3.9 g |
| Propylene glycol monomethyl ether acetate | 79.6 g |

The organic pigment dispersion composition having the above composition was dispersed with a motor mill M-50 (manufactured by Eiger Japan K.K.) using zirconia beads having a diameter of 0.5 mm at a rotating speed of 2000 rpm for 1 hour, subsequently using zirconia beads having a diameter of 0.1 mm at a rotating speed of 2000 rpm for 4 hours. Thus, the organic pigment dispersion composition D was obtained.

[Measurement of Contrast]

The thus-obtained sample of the organic pigment dispersion composition was applied to a glass substrate to give a layer thickness of 2 μm to thereby produce respective samples. As a backlight unit, a three-wavelength cold-cathode-tube light source (FWL18EX-N, trade name, manufactured by Toshiba Lighting & Technology Corporation) provided with a diffuser plate was used. Each of the samples was placed between two sheets of polarizing plates (HLC2-2518, trade name, the polarizing plates were manufactured by Sanritz Corporation), and then amounts of transmitted light at the time when polarization axes of the two polarizing plates were parallel and the time when the polarization axes were perpendicular were measured. The ratio of these transmitted light amounts was defined as a contrast (see Color Filter for 512 color display 10.4"-size TFT-LCD, co-authored by Ueki, Koseki, Fukunaga, and Yamanaka, The seventh Color Optics Conference (1990), etc.). Chromaticity was measured using a color luminance meter (BM-5 (trade name), manufactured by Topcon Technohouse Corporation). The above-described two sheets of polarizing plates, sample, and color luminance meter were placed at the following positions. One of the polarizing plates was disposed at a distance of 13 mm from a backlight. A cylinder of 11 mm in diameter and 20 mm in length was disposed at a distance of 40 mm to 60 mm from the backlight. The light transmitted through the cylinder was irradiated to a color filter disposed at a distance of 65 mm from the backlight. The transmitted light was passed through the other polarizing plate disposed at a distance of 100 mm from the backlight and measured with a color luminance meter disposed at a distance of 400 mm from the backlight. The measuring angle in the color luminance meter was set to 2°. The light amount of the backlight was set so that its brightness (luminance) would be 1280 cd/$m^2$, when the two sheets of polarizing plates were arranged in a position of parallel nicol and no color filter was disposed.

[Evaluation of coating unevenness]

From a substrate coated with the photosensitive resin composition, ten spots were randomly selected and subjected to color evaluation by using a chromaticity meter (trade name: MCPD-1000, manufactured by Otsuka Electronics). Color difference (i.e., ΔEab value) was measured for each spot, and the highest value was evaluated according to the following criteria. Smaller ΔEab value indicates better coatability.

<Evaluation criteria>

o: ΔEab value < 5
Δ: 5 ≤ ΔEab value ≤ 10
×: 10 < ΔEab value

The evaluation results of pigment dispersion compositions of the Examples and Comparative examples are given in Table 1.
Table 1

| | Contrast | Viscosity (mPa·s) | Primary particles | Secondary particles | | Coating unevenness |
|---|---|---|---|---|---|---|
| | | | Particle diameter (nm) | Particle diameter (nm) | Particle size distribution (%) | |
| Example 1 | 46000 | 5.0 | 13.5 | 64.3 | 18.7 | o |
| Example 2 | 51000 | 14.8 | 14.2 | 42.1 | 22.3 | o |
| Comparative example 1 | 31000 | 21.1 | 21.9 | 91.2 | 30.6 | Δ |

(continued)

| | Contrast | Viscosity (mPa·s) | Primary particles | Secondary particles | | Coating unevenness |
|---|---|---|---|---|---|---|
| | | | Particle diameter (nm) | Particle diameter (nm) | Particle size distribution (%) | |
| Comparative example 2 | 36000 | 11.6 | 15.2 | 75.0 | 20.7 | o |

As it is apparent from Table 1, a film having excellent contrast and homogeneous film thickness with no color unevenness/concentration unevenness can be preferably produced according to the present invention. On the other hand, it was impossible to obtain sufficient performances in the Comparative examples.

This non-provisional application claims priority on Patent Application No. 2009-223219 filed in Japan on September 28, 2009, which is entirely herein incorporated by reference.

## Claims

1. A pigment dispersion comprising: a medium and pigment fine particles contained in the medium, the pigment dispersion is **characterized in that** the pigment fine particle is made of a compound represented by the following formula (1), and the pigment dispersion has a contrast value of 40,000 or more:

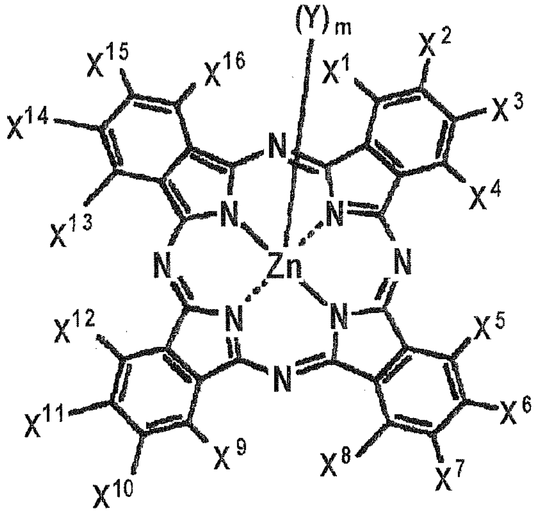

Formula (1)

wherein, any 8 to 16 of $X^1$ to $X^{16}$ represent a fluorine atom, a chlorine atom, a bromine atom, or an iodine atom whereas the remaining represent a hydrogen atom; The fluorine atom, chlorine atom, bromine atom, or iodine atom as $X^1$ to $X^{16}$ may be the same as or different from each other; Y represents a fluorine atom, a chlorine atom, a bromine atom, an iodine atom, or an oxygen atom, and m represents an integer of 0 to 2; and
wherein, the contrast value is determined as follows:

[Contrast value: A dispersion having a pigment concentration of 15% by mass is coated to give a thickness of 2 μm on a glass plate, the resulting sample is interposed between two polarizing plates, and an amount of transmitted light when the polarization axes from a light source of a three-wavelength cold cathode tube are parallel (Ta) and an amount of transmitted light when the said polarization axes are perpendicular (Tb) are measured, and the amount of parallel transmitted light (Ta) is divided by the amount of perpendicular transmitted light (Tb) to give Ta/Tb].

2. The pigment dispersion according to Claim 1, wherein the average particle diameter of primary particles of the pigment fine particles is 10 nm or more and 50 nm or less and particle size distribution is 20% or less, and the average particle diameter of secondary particles that are produced by aggregation of the primary particles is 10 nm

or more and 70 nm or less and particle size distribution is 30% or less.

**3.** The pigment dispersion according to Claim 1 or 2, wherein the dispersion comprises pigment fine particles produced by mixing a solution containing the compound represented by the above formula (1) dissolved in a good solvent with a poor solvent for the pigment, and producing the fine particles from a mixture solution.

**4.** The pigment dispersion according to Claim 3, wherein the mixture solution for producing the pigment fine particles is prepared by concentration followed by re-dispersion.

**5.** The pigment dispersion according to Claims 1 to 4, which is a coloring material for a color filter.

**6.** A colored resist composition for a color filter, wherein the colored resist composition comprises the pigment dispersion according to Claim 5.

**7.** A method of producing a pigment dispersion comprising the steps of:
preparing a dispersion of pigment compound by
bringing a pigment solution mixed with a poor solvent to form the pigment fine particles in a mixed liquid; the pigment solution containing a pigment compound represented by the following formula (1) dissolved in a good solvent, the poor solvent being poorly soluble for the pigment, and concentrating the obtained pigment dispersion, and re-dispersing the resultant.

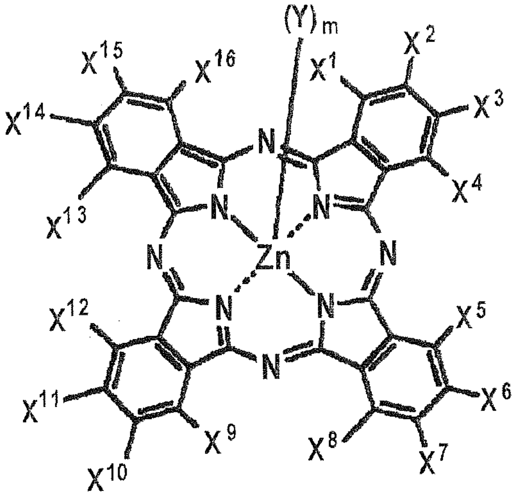

Formula (1)

wherein, any 8 to 16 of $X^1$ to $X^{16}$ represent a fluorine atom, a chlorine atom, a bromine atom, or an iodine atom whereas the remaining represent a hydrogen atom;
The fluorine atom, chlorine atom, bromine atom, or iodine atom as $X^1$ to $X^{16}$ may be the same as or different from each other; Y represents a fluorine atom, a chlorine atom, a bromine atom, an iodine atom, or an oxygen atom, and m represents an integer of 0 to 2.

*Fig. 1*

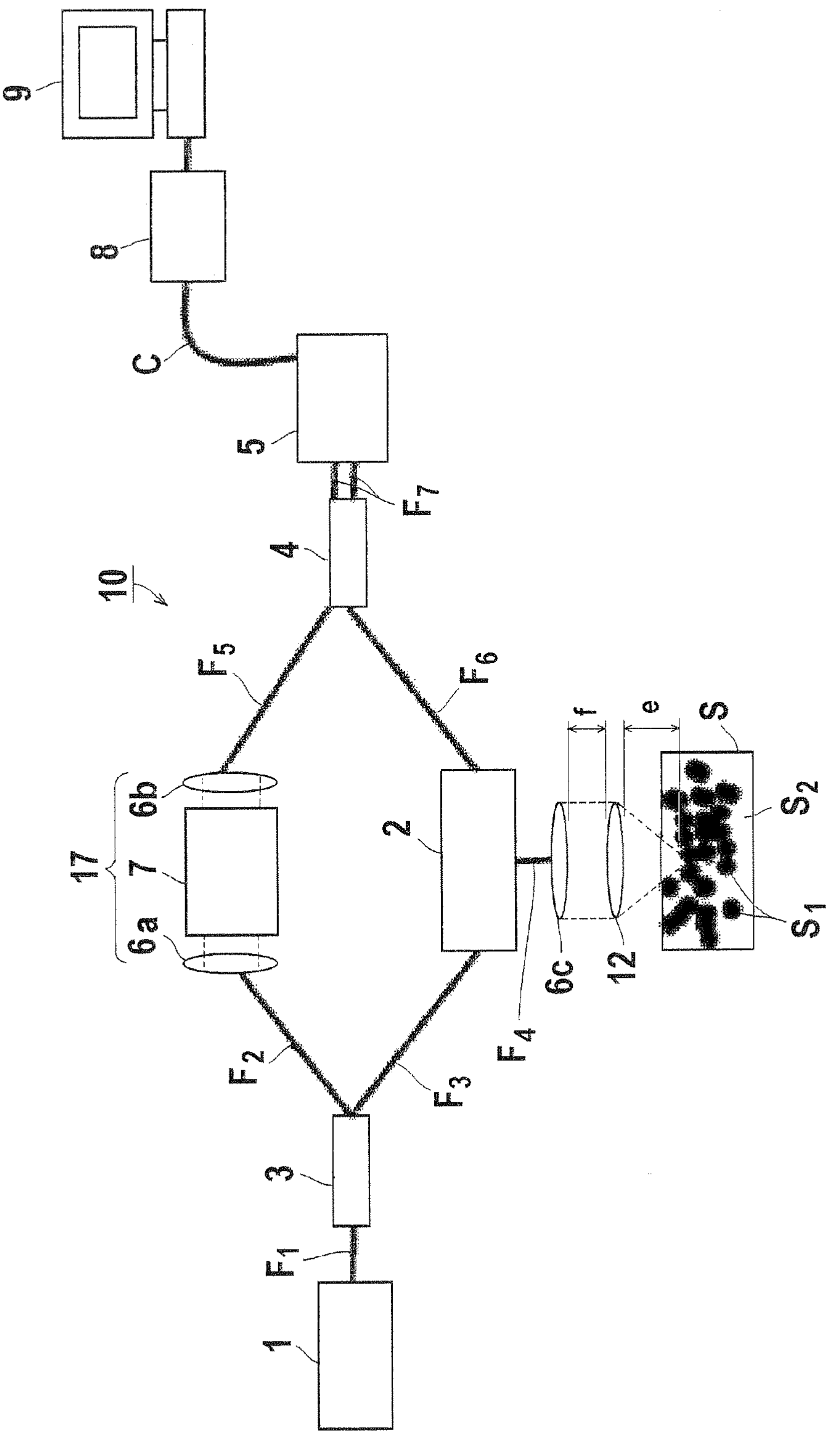

**INTERNATIONAL SEARCH REPORT**

International application No.
PCT/JP2010/066674

A. CLASSIFICATION OF SUBJECT MATTER
*C09B67/46*(2006.01)i, *C09B67/20*(2006.01)i, *C09D17/00*(2006.01)i, *G02B5/20*(2006.01)i

According to International Patent Classification (IPC) or to both national classification and IPC

B. FIELDS SEARCHED

Minimum documentation searched (classification system followed by classification symbols)
C09B67/46, C09B67/20, C09D17/00, G02B5/20

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2009-181070 A (Toppan Printing Co., Ltd.), 13 August 2009 (13.08.2009), paragraphs [0053], [0059] to [0062], [0067] to [0068], [0072], [0077] to [0079], [0163] (Family: none) | 1,3-7<br>1-7 |
| Y | JP 2008-138194 A (Fujifilm Corp.), 19 June 2008 (19.06.2008), claims 1, 14, 23; paragraph [0010] (Family: none) | 1-7 |
| A | JP 2008-122478 A (Fujifilm Corp.), 29 May 2008 (29.05.2008), claims 1, 7 & CN 101178540 A | 1-7 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>10 December, 2010 (10.12.10) | Date of mailing of the international search report<br>21 December, 2010 (21.12.10) |
| Name and mailing address of the ISA/<br>Japanese Patent Office<br>Facsimile No. | Authorized officer<br><br>Telephone No. |

Form PCT/ISA/210 (second sheet) (July 2009)

**INTERNATIONAL SEARCH REPORT**

International application No.
PCT/JP2010/066674

C (Continuation). DOCUMENTS CONSIDERED TO BE RELEVANT

| Category* | Citation of document, with indication, where appropriate, of the relevant passages | Relevant to claim No. |
|---|---|---|
| A | JP 2007-284590 A (Dainippon Ink And Chemicals, Inc.), 01 November 2007 (01.11.2007), claims 4 to 5 (Family: none) | 1-7 |
| A | JP 2006-284691 A (Dainippon Ink And Chemicals, Inc.), 19 October 2006 (19.10.2006), claims 1, 6 (Family: none) | 1-7 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008122478 A
- JP 2007284590 A
- JP 2006284691 A
- JP 2003016182 A
- JP 2005017716 A
- JP 2005361447 A
- JP 2005017521 A
- JP 2005121600 A
- JP 2007009096 A
- JP 7331182 A
- JP 2007262378 A
- JP 2004043776 A
- JP 2003113341 A
- JP 59044615 A
- JP 54034327 B
- JP 58012577 B
- JP 54025957 B
- JP 59053836 A
- JP 59071048 A
- US 4139391 A
- JP 48041708 B
- JP 50006034 B
- JP 51037193 A
- JP 48064183 A
- JP 49043191 B
- JP 52030490 B
- JP 11133600 A
- US 2367660 A
- US 2448828 A
- US 2722512 A
- US 3046127 A
- US 2951758 A
- US 3549367 A
- JP 51048516 B
- US 4239850 A
- US 4212976 A
- JP 2006023696 A
- JP 2007 A
- JP 284590 A
- JP 2009223219 A


### Non-patent literature cited in the description


- **UEKI ; KOSEKI ; FUKUNAGA ; YAMANAKA.** Color Filter for 512 color display 10.4''-size TFT-LCD. *The seventh Color Optics Conference,* 1990
- **AKIO SASAKI.** Electronic Display Device. Kogyo Chosakai Publishing Inc, 1990
- **NAOTAKA IBUKI.** Display Devices. Sangyo Tosho, 1989